# EUROPÄISCHE PATENTSCHRIFT

(11) **EP 2 526 591 B1**
(45) Veröffentlichungstag und Bekanntmachung des Hinweises auf die Patenterteilung: **11.05.2016**
(21) Anmeldenummer: 11706736.3
(22) Anmeldetag: 20.01.2011
(51) Int. Cl.: H01R 13/627, G02B 6/42, H01R 13/633, G02B 6/38

(54) **STECKERELEMENT MIT EINEM VERRIEGELUNGSMECHANISMUS**
CONNECTOR ELEMENT WITH LATCHING MECHANISM
ÉLÉMENT DE CONNECTEUR AVEC MÉCANISME DE VERROUILLAGE

(30) Priorität: 22.01.2010 DE 102010005377
(43) Veröffentlichungstag der Anmeldung: 28.11.2012
(73) Patentinhaber: LEONI Kabel Holding GmbH, 90402 Nürnberg (DE)
(72) Erfinder: KAPPLA, Olaf, 80636 München (DE); NIESEMEYER, Norbert, 96450 Coburg (DE); STEINBRÜCK, Marco, 85630 Grasbrunn (DE)
(74) Vertreter: FDST Patentanwälte
(86) Internationale Anmeldenummer: PCT/EP2011/000215
(87) Internationale Veröffentlichungsnummer: WO 2011/089003

(56) Entgegenhaltungen:
- US-A1- 2005 208 821
- US-A1- 2006 014 408
- US-A1- 2006 258 201
- US-A1- 2009 209 125
- US-A1- 2009 291 584
- US-B1- 6 648 665
- US-B1- 7 416 433
- US-B1- 7 422 457
- US-B2- 7 008 253

## Beschreibung

Die Erfindung betrifft ein Steckerelement mit einem Verriegelungsmechanismus zur Ausbildung einer verriegelbaren Steckverbindung mit einem Gegenstück, insbesondere ein sogenanntes QSFP-Steckerelement mit den Merkmalen des Oberbegriffs des Anspruchs 1.

Das Steckerelement ist insbesondere als so genanntes QSFP (Quad Small Formfactor Plugable) Steckerelement ausgebildet, wie es beispielsweise spezifiziert ist in der "SFF-8436 Specification for QSFP+ COPPER AND OPTICAL MODULES" Das Steckerelement ist daher insbesondere als ein Flachstecker mit üblicherweise rechteckigem Querschnitt und geringer Aufbauhöhe ausgebildet. Derartige Steckerelemente dienen zur Ausbildung von kleinbauenden und flachen Steckverbindungen insbesondere für Daten- oder Signalleitungen mit hoher Datenübertragungsrate in Netzwerken. Sie werden zur elektrischen und/oder optischen Anbindung der Datenleitung an elektrischen oder elektro-optischen Geräten eingesetzt. Sie dienen dabei bevorzugt zum Anschluss der Datenleitung an eine Leiterplatte. Üblicherweise weist hierbei die Leiterplatte ein insbesondere als Gegensteckelement ausgebildetes Gegenstück auf, in das das Steckerelement zur Ausbildung der Steckverbindung einsteckbar ist. Es wird hierbei eine möglichst geringe Bauform angestrebt, um auf einem begrenzten Bauraum beispielsweise mehrere derartige Steckverbinder nebeneinander anzuordnen. Derartige Steckverbindungen sind üblicherweise gegen ein unbeabsichtigtes Lösen über einen manuell lösbaren Verriegelungsmechanismus gesichert. Aufgrund der angestrebten geringen Bauform muss der Verriegelungsmechanismus auf engstem Bauraum im Steckerelement integriert sein. Dabei muss bei kostengünstiger Ausgestaltung eine hohe Dauerfunktionssicherheit gewährleistet werden.

Beispiele für Steckerelemente für Flachstecker sind aus der US 7,008,253 B2 oder der US 6,648,665 B1 zu entnehmen. Die darin beschriebenen Steckerelemente weisen ein als Ziellasche ausgebildetes Betätigungselement auf, welches gabelförmig ausgebildet ist und dessen Gabelarme innerhalb des Steckergehäuses geführt sind. Jedem Gabelarm ist ein Verriegelungselement zugeordnet, welches jeweils eine Rastnase aufweist, welche in eine entsprechende Ausnehmung im Gehäuse des Gegenstücks eingreift. Zum Entriegeln wird durch eine Relativbewegung zwischen dem Verriegelungselement und dem Betätigungselement die Rastnase aus der Verriegelungsstellung gebracht. Bei der US 6,648,665 B1 erfolgt dies durch eine Drehbewegung der Verriegelungselemente um eine Vertikalachse, bei der US 7,008,253 B2 werden die nach Art von Federzungen ausgebildeten Verriegelungselemente bei einer Verschiebung des Betätigungselements nach außen versetzt. Die Verriegelungselemente sind jeweils separate Bauteile, die ebenfalls in das Gehäuse eingesetzt sind. Insgesamt ist dadurch ein komplexer Aufbau erforderlich.

Aus der US 2009/0209125 A1 ist ein Steckerelement mit den Merkmalen des Oberbegriffs des Anspruchs 1 zu entnehmen. Dieses weist ein Betätigungselement mit zwei Gabelarmen auf, an deren Ende ein Entriegelungselement angeordnet ist. Dieses Entriegelungselement weist eine Schräge auf, die beim Zurückziehen des Betätigungselements in Längsrichtung des Steckers eine seitliche Verriegelungslasche des korrespondierenden Gegenstücks nach außen weg drückt und somit die Verriegelung löst. Ergänzend ist in jedem der Gabelarme ein Federelement angeordnet, mit dessen Hilfe das Betätigungselement nach einem Betätigen wieder in eine Grundposition zurückgeführt wird. Das Federelement ist hierbei als ein separates Teil und zwar nach Art einer Schenkelfeder ausgebildet, welche auf einen Befestigungszapfen aufgesteckt ist. Der eine Schenkel stützt sich in einer am Betätigungselement ausgebildeten Aussparung als Wiederlager ab. Der andere Schenkel liegt demgegenüber an einem vertikalen Gehäusesteg des Steckergehäuses an, welcher in eine Ausnehmung des Entriegelungselements von oben eingreift. Diese Ausgestaltung erfordert durch das Zusammenwirken mehrerer separater Teile einen hohen Montageaufwand.

Der Erfindung liegt die Aufgabe zugrunde, ein Steckerelement mit einem kostengünstig herzustellenden und manuell lösbaren Verriegelungsmechanismus bei hoher Funktionssicherheit bereitzustellen.

Die Aufgabe wird gemäß der Erfindung gelöst durch ein Steckerelement mit den Merkmalen des Patentanspruchs 1. Das Steckerelement ist dabei insbesondere als Flachstecker mit üblicherweise rechteckigem Querschnitt und geringer Aufbauhöhe ausgebildet. Das Steckerelement ist insbesondere ein so genannter SFP-Stecker (small form factor plugable), insbesondere ein so genannter QSFP-Stecker. Das Steckerelement dient zur Ausbildung einer verriegelbaren Steckverbindung mit einem Gegenstück. Dieses weist hierzu üblicherweise ein vorzugsweise ebenfalls rechteckförmiges Gehäuse auf, in das das Steckerelement eingesteckt wird. Das Steckerelement weist ein sich in Längsrichtung erstreckendes Steckergehäuse sowie ein in Längsrichtung insbesondere innerhalb des Steckergehäuses geschützt einliegendes und verschieblich gelagertes Betätigungselement auf, welches zur Entriegelung manuell in Längsrichtung verschoben wird. Zur Verriegelung ist unmittelbar zwischen den beiden Gehäusen ein Rastelementpaar vorgesehen, nämlich einerseits eine elastische/flexible Verriegelungslasche sowie andererseits eine Aussparung in einem jeweiligen Wandungsabschnitt des Steckergehäuses bzw. des Gegenstücks. Vorzugsweise weist das Steckergehäuse die Aussparung und das Gegenstück die Verriegelungslasche auf. Die Rastelementpaare sind dabei insbesondere jeweils an gegenüberliegenden Seitenwandungen der Gehäuse ausgebildet. Die Verriegelungslasche ist dabei Teil der Seitenwandung und durch eine insbesondere U-förmige Ausstanzung in Teilbereichen von dieser getrennt in Querrichtung nach innen auf das Steckerhäuse zugebogen. Sie ist daher nach Art einer Federlasche ausgebildet. Im gesteckten Zustand schnappt die Verriegelungslasche in die Aussparung des Steckergehäuses ein und hintergreift eine durch die Aussparung gebildete Kante, so dass in Längsrichtung eine formschlüssige Verriegelung ausgebildet ist. Diese verhindert ein Herausziehen des Steckerelements aus dem Gegenstück. Insbesondere stößt die Verriegelungslasche mit ihrer Stirnseite im verriegelten Zustand gegen die Kante.

Das Betätigungselement weist ein Entriegelungselement auf, welches bei einem Zurücksetzen des Betätigungselements die Verriegelungslasche in Querrichtung aus der Aussparung und damit aus der Verriegelungsposition drückt.

Bei dieser Ausgestaltung ist daher vorgesehen, dass die Verriegelung unmittelbar zwischen den Gehäusen des Steckerelements einerseits und des Gegenstücks andererseits ausgebildet ist, es sind daher keine zusätzlichen Verriegelungselemente erforderlich, welche in Querrichtung versetzt werden müssen. Insgesamt ist dadurch ein vereinfachter Aufbau erreicht.

An gegenüberliegenden Seitenwandungen sind Verriegelungspaare vorgesehen, d.h. das Steckergehäuse weist an gegenüberliegenden Wandungsabschnitten jeweils eine insbesondere als Durchbruch ausgebildete Aussparung auf. Das Betätigungselement ist gabelförmig mit zwei Gabelarmen ausgebildet, an deren Enden jeweils ein Entriegelungselement vorgesehen ist.

Um das Betätigungselement und insbesondere das Entriegelungselement mit dem Entriegler in der Grundposition zu halten bzw. nach einer Betätigung wieder in die Grundposition vorzugsweise automatisch zurückzuführen, ist ein entsprechend wirkendes Federelement vorgesehen. Dieses übt eine Federkraft auf das Betätigungselement in Richtung der Längsrichtung auf. Beim Betätigen, also Zurückziehen des Betätigungselementes ist dieses gegen die Federkraft zu betätigen. Die Federkraft ist dabei derart bemessen, dass das Zurücksetzen in die Grundposition vorzugsweise automatisch allein durch die Federkraft erfolgt.

Das Federelement ist hierbei am Entriegelungselement oder alternativ am Betätigungselement selbst ausgebildet. Es ist also kein zusätzliches Bauteil erforderlich. Das Federelement ist dabei als am Entriegelungselement oder am Betätigungselement angeformte Federlasche oder Federsteg ausgebildet. Die Federlasche greift zweckdienlicherweise in ein am Steckergehäuse ausgeformtes Widerlager ein, ist dort also bei einer Verschiebung unbeweglich gehalten, so dass eine Verschiebung des Betätigungselements zu einem Verbiegen der Federlasche führt. Vorzugsweise ist die Federlasche bereits in der Grundposition vorgespannt, um das Betätigungselement zuverlässig in der Grundposition zu halten. Die Federlasche erstreckt sich in Vertikalrichtung, also senkrecht zur Längsrichtung und senkrecht zur Querrichtung. Die Federlasche verläuft daher um 90° versetzt zu dem Entriegler.

Insgesamt ist das Entriegelungselement vorzugsweise als ein schmales, plattenförmiges Element ausgebildet mit zwei gegenüberliegenden Flachseiten, die mit zwei horizontal in Querrichtung erstreckende Stirnseiten verbunden sind. Der Entriegler steht aus einer der Flachseiten hervor. Das plattenförmige Grundelement weist weiterhin vorzugsweise eine Ausnehmung auf, von deren Grund aus sich die Federlasche in Vertikalrichtung erstreckt und über eine der Stirnseiten übersteht. Alternativ weist vorzugsweise das Betätigungselement eine Ausnehmung auf von deren Grund aus sich die Federlasche in Vertikalrichtung erstreckt und über eine der Stirnseiten übersteht.

Bevorzugt ist dabei ein jeweiliger Gabelarm in einer Führung innerhalb des Gehäuses geführt, die durch die Seitenwand sowie eine parallel hierzu verlaufende Führungswand gebildet ist. Im Wandungsbereich ist daher das Steckergehäuse doppelwandig zur Ausbildung der Führung ausgebildet.

Das Entriegelungselement weist in zweckdienlicher Ausgestaltung an einer Außenseite einen Entriegler mit einer schräg zur Längsachse verlaufenden Fläche auf, die beim Verschieben des Betätigungselements mit der Verriegelungslasche zusammenwirkt und diese zur Entriegelung in Querrichtung nach außen drückt. In einer Grundposition, die der Verriegelungsstellung entspricht, ist daher der Entriegler - in Längsrichtung betrachtet - vor der Verriegelungsasche positioniert, so dass beim Ziehen am Betätigungselement in rückwärtiger Richtung der Entriegler die Verriegelungslasche nach außen drückt. Es erfolgt also eine lineare Relativverschiebung des Entrieglers bezüglich der Verriegelungslasche. Der Entriegler ist im Querschnitt gesehen beispielsweise keilförmig mit einer geradlinig oder auch bogenförmig verlaufenden Fläche ausgestaltet, die mit der Lasche zusammenwirkt. Bei einer Betätigung wird daher die Verriegelungslasche sukzessive weiter nach außen gedrückt.

In bevorzugter Weiterbildung ist vorgesehen, dass die Aussparung in Längsrichtung eine Fortführung aufweist, in der der Entriegler in der Grundposition einliegt. Die Fortführung ist dabei unter Ausbildung einer Stufe verwirklicht, wobei die Fortführung vorzugsweise mittig angeordnet ist. Stufenkanten bilden dabei die Kante, die im verriegelten Zustand von der Verriegelungslasche hintergriffen wird.

Der Entriegler liegt mit seiner flachen Außenseite an der Innenseite der Seitenwand des Steckergehäuses an und der Entriegler steht in Querrichtung betrachtet aus der Außenseite hervor und greift in die Fortführung ein. Vorzugsweise erstreckt sich der Entriegler in Querrichtung über eine Höhe, die der Dicke der Wandung der Seitenwand des Steckergehäuses entspricht oder etwas geringer ist.

Gemäß einer bevorzugten Ausgestaltung wird das Entriegelungselement zumindest in Teilbereichen vom Inneren des Steckergehäuses nach außen geführt und verläuft entlang einer Außenwandung. Insbesondere ist hierbei vorgesehen, dass es sich um ein separates Entriegelungselement, insbesondere als ein federelastisches Blechteil handelt. Dieses ist vorzugsweise über eine formschlüssige Verbindung, beispielsweise eine Steckverbindung mit dem im Inneren des Steckergehäuses geführten Betätigungselement verbunden.

Der besondere Vorteil dieser Ausführungsvariante ist darin zu sehen, dass das Entriegelungselement keinen Platz im Innenraum des Steckergehäuses beansprucht und damit der Innenraum - im Vergleich zu einer Ausführungsvariante mit innenliegendem Entriegelungselement - vergrößert ist.

Das Entriegelungselement schließt hierbei vorzugsweise bündig mit den weiteren Seitenwandungsteilen des Steckergehäuses ab. An seinem vorderen Ende weist das Entriegelungselement den Entriegler auf. Zweckdienlicherweise ist bei dieser Ausführungsvariante das Federelement am Betätigungselement innenliegend im Gehäuseinneren ausgebildet.

Gemäß einer zweckdienlicher Ausgestaltung ist das Entriegelungselement insgesamt als ein einstückiges Kunststoff-Bauteil, insbesondere Kunststoff-Spritzgussteil, ausgebildet. Vorzugsweise ist das gesamte Betätigungselement aus Kunststoff ausgebildet. Das Entriegelungselement ist insbesondere ein separates Bauteil, welches an einem Grundteil des Betätigungselements befestigt ist, vorzugsweise durch eine Verrastung. Alternativ hierzu ist das gesamte Betätigungselement als ein einstückiges Kunststoffteil ausgebildet, wobei hierbei zweckdienlicherweise vorgesehen ist, dass für unterschiedliche Funktionszonen unterschiedliche Kunststoffe, beispielsweise in einem Mehrkomponenten-Spritzgussprozess verwendet sind. Insbesondere für das Entriegelungselement wird ein von dem Grundteil verschiedener Kunststoff herangezogen. Alternativ ist das Entriegelungselement als metallisches Teil ausgebildet.

Im Sinne eines Gleichteileprinzips sind bei der separaten Ausgestaltung der Entriegelungselemente diese vorzugsweise identisch ausgebildet und an den Gabelenden um 180° zueinander gedreht angeordnet. Dies führt dazu, dass die Feder lasche bei dem einen Entriegelungselement nach unten und die Federlasche des anderen Entriegelungselements nach oben in ein jeweiliges Widerlager eingreift. Es brauchen daher keine unterschiedlichen Werkzeugformen für zwei verschiedene Entriegelungselemente vorgesehen sein. Im Sinne eines Gleichteileprinzips sind alternativ die Entriegelungselemente, falls die Federlaschen am Betätigungselement integriert sind, ebenfalls identisch ausgebildet und an den Gabelenden um 180° zueinander gedreht angeordnet. Auch gestaltet sich die Montage einfach. Um dies zu ermöglichen, ist auch das Steckergehäuse entsprechend ausgebildet, welches für jeden Gabelarm daher zwei gegenüberliegende Widerlager aufweist. Diese sind insbesondere nach Art von einfachen Ausnehmungen in der Bodenseite und Deckelseite des Steckergehäuses ausgebildet.

Das Betätigungselement weist allgemein ein von außerhalb des Steckergehäuses betätigbares Griffteil auf, an das sich die Gabelarme anschließen. Das Betätigungselement wird von der dem Gegenstück abgewandten Rückseite des Steckerelements in dieses in Längsrichtung eingeführt. An dieser Rückseite des Steckerelements ist ebenfalls das erforderliche Kabel eingeführt. Um eine möglichst hohe Flexibilität im Hinblick auf die Anordnung des Griffteils zu ermöglichen, ist ein in etwa L-förmiger Schenkel oder Anschlusswinkel vorgesehen, mit dem das Griffteil in der Grundposition an der Rückseite anliegt. Der Anschlusswinkel erstreckt sich dabei in Vertikalrichtung und vorzugsweise über die Höhe des Steckergehäuses, so dass das Griffteil oberhalb des zentral eingeführten Kabels angeordnet ist. Das Griffteil fluchtet hierbei vorzugsweise mit der Flachseite des Steckergehäuses. Weiterhin ist vorzugsweise die Ausgestaltung derart gewählt, dass das gesamte Betätigungselement wahlweise um 180° gedreht werden kann, so dass das Griffteil je nach Bedarf auf beiden Seiten angeordnet werden kann.

Dieser letztgenannte Aspekt der Ermöglichung der wahlweisen Anordnung wird als ein eigenständiger erfinderischer Aspekt angesehen, unabhängig von der speziellen im kennzeichnenden Teil des Anspruchs 1 beschriebenen unmittelbaren Verrastung zwischen den Gehäuseteilen. Eine Teilanmeldung hierauf bleibt vorbehalten.

Um diese wahlweise Anordnung zu ermöglichen, ist insbesondere vorgesehen, dass die in das Steckergehäuse hinein erstreckende Gabelarme sich mittig an den L-Schenkel anschließen. D.h. sie erstrecken sich symmetrisch entlang einer Mittenlinie, so dass sie bezüglich einer 180°-Drehung um die Längsrichtung symmetrisch ausgebildet sind. Entsprechend ist auch vorgesehen, dass die im Steckergehäuse ausgebildete Führung bei einer derartigen 180° Drehung um die Längsrichtung symmetrisch ausgebildet ist.

Zweckdienlicherweise ist im Hinblick auf das Steckergehäuse eine Auftrennung in zwei Steckergehäusehälften vorgesehen, die insbesondere entlang einer Mittenebene des Steckergehäuses getrennt sind. In jedem Steckergehäuseteil ist dabei ein Führungskanalteil vorgesehen, das sich zu der Führung für das Betätigungselement ergänzt. Die Führungskanalteile sind dabei symmetrisch ausgebildet und weisen jeweils das bereits erwähnte Widerlager insbesondere in Form einer Ausnehmung auf.

Allgemein wird über einen derartigen Steckverbinder eine elektrische Kontaktverbindung hergestellt. Diese ist vorliegend nicht näher beschrieben, da an sich bekannt und in Normen und Spezifikationen festgelegt. Allgemein weist das Steckerelement eine innen liegende Leiterplatte (PCB-Board) auf, die mit den Leitungen des Datenkabels kontaktiert ist. Diese ist am Gehäuse vorzugsweise entweder durch eine Verrastung oder durch ein so genanntes Overmolding fixiert.

Ein Ausführungsbeispiel der Erfindung wird nachfolgend anhand der Figuren näher erläutert. Hierin zeigen:
- Fig. 1: eine vereinfachte perspektivische Darstellung eines Steckerelements mit an dessen Rückseite angeschlossenem Kabel und einem Gegenstück im ungesteckten Zustand,
- Fig. 2: die in Fig. 1 dargestellten Elemente im miteinander verbundenen Zustand,
- Fig. 3: eine Explosionsdarstellung von einigen Bauteilen des Steckerelements, die insbesondere für den Entriegelungsmechanismus relevant sind,
- Fig. 4A: eine perspektivische Darstellung eines Betätigungselements mit einem als separates Bauteil ausgebildeten Entriegelungselement vor dessen Montage,
- Fig. 4B: das in Fig. 4A dargestellte Betätigungselement mit zwei endseitig an Gabelarmen montierten Entriegelungselementen,
- Fig. 5A: das in Fig. 4B dargestellte Betätigungselement zusammen mit einem Gehäuseunterteil vor dem Einsetzen des Betätigungselements in das Gehäuseunterteil,
- Fig. 5B: die in Fig. 5A dargestellten Bauteile im zusammengefügten Zustand,
- Fig. 6A: eine Schnittdarstellung durch das Steckergehäuse entlang der Längsrichtung durch das Betätigungselement,
- fig. 6B: eine Aufsicht auf das in einem Gehäuseunterteil einliegende Betätigungselement,
- Fig. 6C: eine vergrößerte Darstellung des Detail W aus Fig. 6A zur Illustration der Position des Entriegelungselements in der verriegelten Grundposition,
- Fig. 6D: eine vergrößerte Darstellung des Detail X aus Fig. 6B zur Illustratation des Zusammenwirkens zwischen Verriegelungslasche und Kante sowie Entriegler in der verriegelten Grundposition,
- Fig. 7A-7D: zu den Fig. 6A-6D korrespondierende Darstellungen in der entriegelten Position,
- Fig. 8: eine perspektivische Darstellung einer zweiten Ausführungsvariante für das Entriegelungselement ähnlich der Figur 5B,
- Fig. 9A: eine perspektivische Darstellung eines Betätigungselements mit einem als separates Bauteil ausgebildeten Entriegelungselement gemäß der zweiten Ausführungsvariante und
- Fig. 9B: eine ausschnittsweise vergrößerte Darstellung des in Fig. 9A markierten Bereichs.

In den Figuren sind gleich wirkende Teile mit den gleichen Bezugszeichen versehen. Weiterhin ist in den Figuren generell auf die Darstellung der erforderlichen elektrischen Kontaktelemente sowie Leiterplattenelemente etc. aus Gründen der Übersichtlichkeit verzichtet.

Das in den Figuren dargestellte Steckerelement 2 ist als Flachstecker mit rechteckförmigem Querschnitt ausgebildet, insbesondere als ein so genannter QSFP-Stecker, welcher insbesondere für Daten- oder Signalleitungen mit hoher Datenübertragungsrate (elektrisch oder optisch) in Netzwerken vorgesehen sind. Das Steckerelement 2 dient zum Einstecken in ein Gegenstück 4, welches als ein Gegensteckerelement ausgebildet ist und üblicherweise unmittelbar auf einer Leiterplatte 6 befestigt ist. Das Steckerelement 2 ist allgemein ein so genanntes SFP-Steckerelement (Small-Form-Factor-Plugable), dessen Breite typischerweise im Bereich von wenigen cm, beispielsweise im Bereich von 2 bis 3 cm, liegt. Seine Höhe oder Dicke liegt darunter und beispielsweise im Bereich von 1,5 und 2 cm. Die gesamte Länge des Steckerelements 2 (Gehäuse ohne überstehendes Griffteil oder Ziellasche) beträgt beispielsweise zwischen 6 und 10 cm. Das Steckerelement 2 dient zum Einstecken in das Gegenstück 4 zur Ausbildung einer Steckverbindung. Das Steckerelement 2 ist dabei mit dem Gegenstück 4 verriegelbar, um ein unbeabsichtigtes Lösen der Steckverbindung zu vermeiden.

Das Steckerelement 2 weist ein Steckergehäuse 10 mit einem unteren Gehäuseteil 10A und einem oberen Gehäuseteil 10B auf, die entlang einer Mittenebene lösbar miteinander verbunden sind. Das Gehäuse 10 weist einen hinteren Bereich 12A sowie einen vorderen Steckbereich 12B auf, welcher zum hinteren Bereich 12A unter Ausbildung einer Stufe abgestuft ist. Der Steckbereich 12B wird bis zu dieser Stufe zur Ausbildung der Steckverbindung in das Gegenstück 4 eingesteckt. Eine Leitung, insbesondere Datenleitung 14 ist an einer Rückseite des Steckergehäuses 10 in dieses eingeführt und im Inneren in nicht näher dargestellter Weise insbesondere mit einem Leiterplattenelement kontaktiert. Von der Rückseite her ist ein Betätigungselement 16 in das Steckergehäuse 10 eingeführt. Dieses dient zur Entriegelung einer im gesteckten Zustand zwischen dem Steckergehäuse 10 und dem Gegenstück 4 ausgebildeten Verriegelung.

Für die Verriegelung im gesteckten Zustand ist an Seitenwänden 18A, 18B des Steckergehäuses 10 sowie des Gehäuses des Gegenstücks 4 jeweils ein Rastelementpaar ausgebildet. Hierzu ist in der Seitenwand 18A des Steckergehäuses 10 eine insbesondere als Durchbruch ausgebildete Aussparung 20 und an der Seitenwand 18B des Gegenstücks 4 eine Verriegelungslasche 22 nach Art einer Federlasche ausgebildet. Die Verriegelungslasche 22 ist durch Freistanzen eines Teilbereichs der Seitenwand 18B erreicht, wobei die Verriegelungslasche 22 in einer Querrichtung 24 betrachtet nach innen gebogen ist. Beim Einsteckvorgang wird die Verriegelungslasche 22 von der Seitenwand 18A zunächst in Querrichtung nach außen gedrückt, bis eine Grund- oder Endposition erreicht ist und die Verriegelungslasche 22 in die Aussparung 20 einschnappt und eine Kante 26 der Aussparung 20 hintergreift, also einen in Längsrichtung 8 wirksamen Formschluss ausbildet. Ein Abziehen des Steckerelements 2 in rückwärtiger Richtung ist dadurch nicht mehr möglich, solange die Verriegelung besteht.

Zur Entriegelung ist ein Entriegelungsmechanismus vorgesehen, der nachfolgend näher erläutert wird. Ein wesentliches Element des Entriegelungsmeschanismus ist hierbei das Betätigungselement 16, das innerhalb des Steckergehäuses 10 in einer kanalartigen Führung 28 geführt ist. Die Führung 28 ist dabei gebildet durch eine jeweilige Seitenwand 18A und eine parallel hierzu verlaufenden Innenwand 30 des Steckergehäuses 10.

Das Betätigungselement ist im Ausführungsbeispiel gabelförmig ausgebildet. In seinem rückwärtigen Teilbereich ist ein als Grifflasche ausgebildetes Griffteil 32 vorgesehen, welches zum Steckergehäuse 10 hin eine Art L-Schenkel 34 aufweist, mit dem es sich in einer Grundposition an der Rückseite des Steckergehäuses 10 abstützt bzw. dort anliegt. Etwa mittig des L-förmigen Schenkels 34 schließt sich jeweils ein Gabelarm 36 an, an deren vorderer Endseite jeweils ein Entriegelungselement 38 durch eine Rastverbindung befestigt ist. Der Griffteil 32 bildet mit den Gabelarmen 36 ein Grundteil aus, an dem die Entriegelungselemente 38 befestigt sind. Das gesamte Betätigungselement 16 ist vorzugsweise als ein Kunststoffteil ausgebildet. Für das Grundteil und die Entriegelungselemente 38 können hierbei unterschiedliche Kunststoffarten vorgesehen sein. Im Unterschied hierzu ist das Steckergehäuse 10 üblicherweise aus Metall. Alternativ kann das Entriegelungselement auch aus Metall sein.

Wie in Fig. 3 gut zu erkennen ist, sind die beiden Gehäuseteile 10A, 10B entlang einer Mittenlinie in zwei Gehäusehälften getrennt. Sie weisen also jeweils Führungsteilkanäle 28A auf, die sich zur Führung 28 im zusammengesetzten Zustand ergänzen. Ebenfalls weisen sie jeweils Aussparungsteile auf, die sich im zusammengesetzten Zustand zur Aussparung 20 ergänzen. Zumindest im Hinblick auf diese Merkmale sind daher die beiden Gehäuseteile 10A, 10B zueinander symmetrisch bezüglich der Mittenebene ausgebildet.

Wie aus der Fig. 3 weiterhin zu erkennen ist, weist die Aussparung 20 unter Ausbildung einer Stufe 40 eine sich in Längsrichtung erstreckende Fortführung 42 auf, so dass die Aussparung 20 insgesamt in etwa T-förmig ausgebildet ist, d.h. die Fortführung 42 ist vorzugsweise mittig angeordnet. Im Bereich der Aussparung 20 weist die Führung 28 an ihrem Grund eine zusätzliche, ein Widerlager 44 bildende Ausnehmung aus.

In die Fortführung 42 greift in einer Grundposition ein Entriegler 46 des Entriegelungselements 38 und weiterhin vorzugsweise in das Widerlager 44 eine Federlasche 48 ein. Das Entriegelungselement 38 ist beispielsweise insgesamt nach Art eines flachen, plattenförmigen Bauteils ausgebildet. Seine Höhe entspricht dabei im Wesentlichen der Höhe des jeweiligen Gabelarms 36, so dass also die Stirnseiten der Gabelarme 36 mit den Stirnseiten der Entriegelungselemente 38 fluchten. An seiner Rückseite ist das Entriegelungselement 38 unter Ausbildung einer Stufe verjüngt und weist in diesem rückwärtigen Bereich eine Rastöffnung auf, in die ein jeweiliger, am Gabelarm 36 ausgebildeter Rastzapfen eingreift. Das Entriegelungselement 38 weist jeweils eine äußere sowie eine innere Flachseite auf. Die äußere Flachseite fluchtet hierbei im montierten Zustand mit der äußeren Flachseite des jeweiligen Gabelarms 36. An dieser äußeren Flachseite 50 ist der Entriegler 46 angeformt, steht also in Querrichtung 24 betrachtet über die Flachseite 50 über. Der Entriegler 46 ist nach Art eines Keils ausgebildet, wobei eine äußere (Keil-)Fläche 52 im Ausführungsbeispiel konkav gekrümmt verläuft. Allgemein verdickt sich daher der Entriegler insbesondere kontinuierlich in Längsrichtung 8 zum Gegenstück 4 hin.

Zur Ausbildung der Federlasche 48 weist das Entriegelungselement 38 oder das Betätigungselement 16 eine Ausnehmung oder Freimachung auf, so dass die Federlasche 48 lediglich bodenseitig mit dem Entriegelungselement 38 elastisch gehalten ist und ansonsten innerhalb des gebildeten Freiraums beweglich ist. Die Federlasche 48 steht sich in Vertikalrichtung 49 über eine Stirnseite 54 über und weist dort im Ausführungsbeispiel eine Verdickung auf, die im montierten Zustand in das Widerlager 44 eingreift. Der gesamte Entriegelungsmechanismus wird vorzugsweise gebildet durch das beschriebene Betätigungselement 16 und der speziellen Ausgestaltung des Steckergehäuses 10 mit der Aussparung 20 und ergänzend vorzugsweise der Führung 28. Weitere Bauelemente sind für den Entriegelungsmechanismus nicht vorgesehen.

Bei den Entriegelungselementen 38 sowie insgesamt auch bei dem Betätigungselement 16 wird konsequent ein Gleichteileprinzip auch für unterschiedliche Anwendungen vorgesehen. Zum einen sind sowohl für die linke als auch für die rechte Gabelseite die Entriegelungselemente 38 identisch ausgebildet und um 180° drehversetzt an den jeweiligen Gabelarmen 36 befestigt. Hierdurch sind keine unterschiedlich ausgebildeten Entriegelungselemente 38 erforderlich.

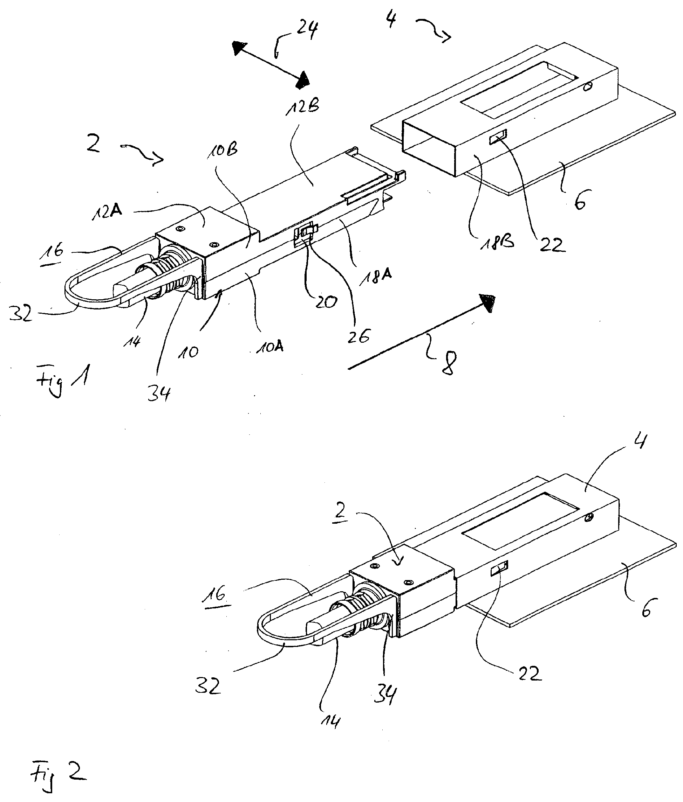

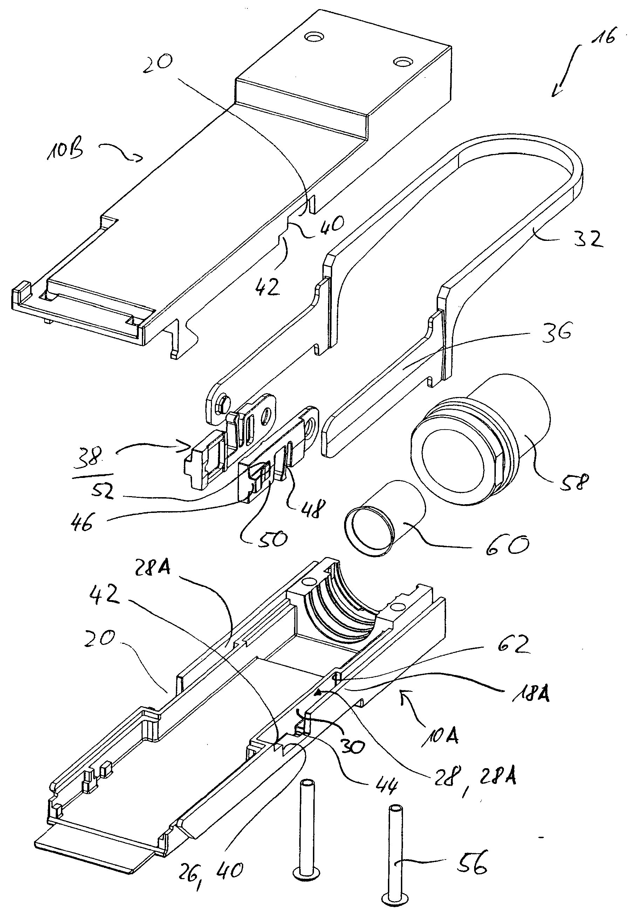

Durch die spezielle Ausgestaltung des Griffteils mit dem L-Schenkel ist das Griffteil 32 wahlweise ober- oder unterhalb der Leitung 14 positionierbar. Wie insbesondere aus den Fig. 1 und 2 zu erkennen ist, fluchtet dabei das Griffteil zumindest nahezu mit der Oberseite des Steckergehäuses 10. Im Sinne dieses Gleichteilekonzepts ist auch die spiegelbildliche Ausgestaltung der beiden Gehäuseteile 10A, 10B hervorzuheben, zumindest insoweit hiervon die Führung 28 und die Aussparung 20 sowie das Widerlager 44 betroffen sind. Die Summe dieser Eigenschaften erfordert zum einen nur eine geringe Anzahl von Bauteilen für unterschiedlichste Varianten. Zudem ist die Montage einfach, da diese unabhängig von unterschiedlichen Varianten ist.

In der Fig. 3 sind ergänzend noch als Nieten ausgebildete Verbindungselemente 56 zur Verbindung der beiden Gehäuseteile 10A,10B dargestellt. Weiterhin sind eine Außenhülse 58 sowie eine Innenhülse 60 dargestellt, durch die die Leitung 14 in das Steckergehäuse 10 eingeführt wird. Die Leitung 14 wird in den Hülsen 58,60 vorzugsweise über eine Crimpverbindung gehalten.

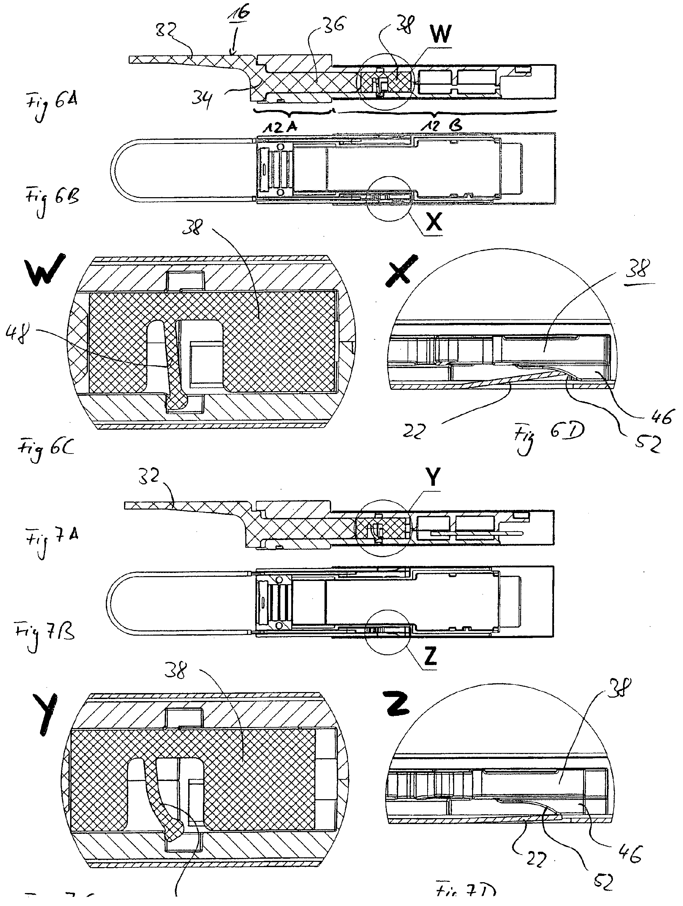

Die Wirkungsweise des Entriegelungsmechanismus wird nun anhand der Fig. 6A bis 6D sowie 7A bis 7D näher erläutert. In der in den Fig. 6A bis 6D dargestellten Grundstellung sind die beiden Gehäuse, nämlich Steckergehäuse 10 sowie das Gehäuse des Gegenstücks 4 miteinander verriegelt. Wie insbesondere aus Fig. 6D zu erkennen ist, hintergreift die nach innen gebogene Verriegelungslasche 22 die Kante 26, die gebildet ist durch ein Wandstück der die Aussparung 20 begrenzenden Seitenwand 18A des Steckergehäuses 10. Weiterhin ist in der Fig. 6D zu erkennen, dass der Entriegler 46 in Längsrichtung 8 betrachtet vor (also in Richtung zum Gegenstück 4 hin) der Verriegelungslasche 22 positioniert ist. Der Entriegler 46 liegt im Ausführungsbeispiel mit seiner Keilfläche 52 an der vorderen Stirnseite der Verriegelungslasche 22 an. Alternativ kann er in der Grundposition auch etwas hiervon beabstandet sein.

Weiterhin greift in der Grundposition - wie aus Fig. 6C zu entnehmen ist - die Federlasche 48 in das Widerlager 44 ein und stützt sich an einer Wandung des Widerlagers 44 ab, so dass die Federlasche 48 bereits etwas vorgespannt ist. Dadurch hält die Federlasche 48 das Entriegelungselement 38 und insgesamt das gesamte Betätigungselement 16 in der in den Fig. 6A bis 6C dargestellten Grundposition. Wie in Fig. 6A zu erkennen ist, liegt das Griffteil 32 mit seinem L-Schenkel an der Rückseite des Steckergehäuses 10 an.

Weiterhin erstreckt sich der Gabelarm 36 auf einer Mittenhöhe bezüglich des vorderen Steckbereichs 12B. Wie aus Fig. 6A zu erkennen ist, ist im Ausführungsbeispiel der hintere Bereich 12A des Steckerbehäuses 10 bezüglich einer Mittenebene nicht exakt symmetrisch, sondern weist an der Oberseite einen größeren Überstand auf. Der L-Schenkel 34 weist eine doppelte Abstufung auf derart, dass zunächst in Fortführung des Gabelarms 36 ein in etwa symmetrisch bezüglich der Mittenebene ausgebildeter T-Kopf angeordnet ist, an den sich dann das Griffteil 32 anschließt. Aufgrund der bezüglich der Mittenebene symmetrischen Ausbildung des T-Kopfes kann das Betätigungselement 16 wahlweise um 180° gedreht angeordnet werden.

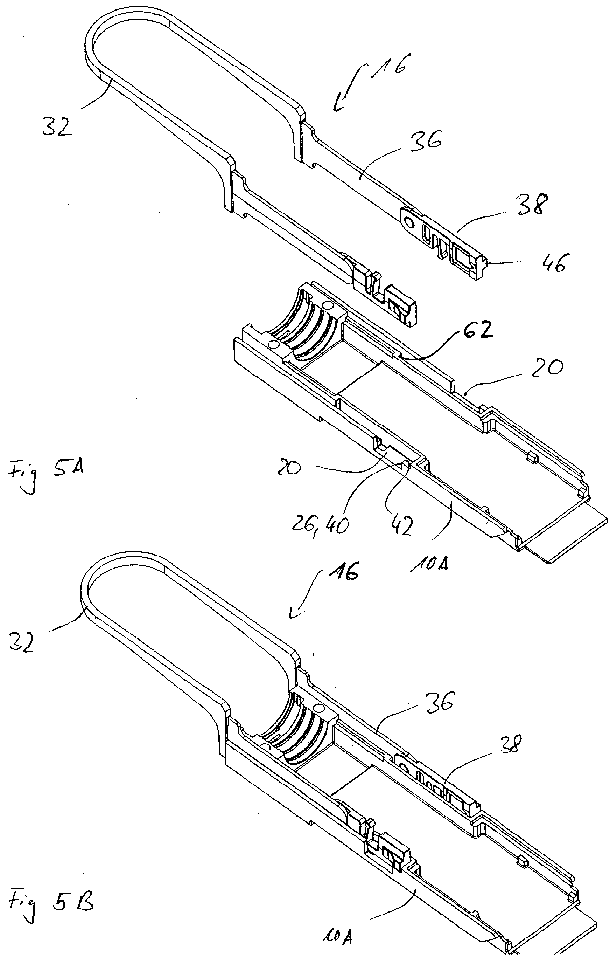

Zum Entriegeln wird manuell am Griffteil 32 dieses nach hinten entgegen der Längsrichtung 8 gezogen. Die Rückwärtsbewegung wird insbesondere durch einen Anschlag 62 in der Führung 28 begrenzt (vgl. Fig. 3, 5A,5B). An diesem Anschlag stützt sich das Entriegelungselement 38 ab.

Gleichzeitig wird - wie aus Fig. 6C ersichtlich - die Federlasche 48 zusehends gespannt, so dass also die Federkraft und damit Rückstellkraft in Längsrichtung 8 erhöht wird.

Die eigentliche Entriegelung erfolgt mit Hilfe des Entrieglers 46, indem dieser durch Zusammenwirken seiner Keilfläche 52 mit der Verriegelungslasche 22 diese in Querrichtung nach außen drückt (Fig. 7D), so dass also das Steckergehäuse 10 nach hinten aus dem Gegenstück 4 herausgezogen werden kann. Durch das Herausdrücken der Verriegelungslasche 22 in Querrichtung wird der Formschluss zwischen der Verriegelungslasche 22 und der Kante 26 aufgehoben.

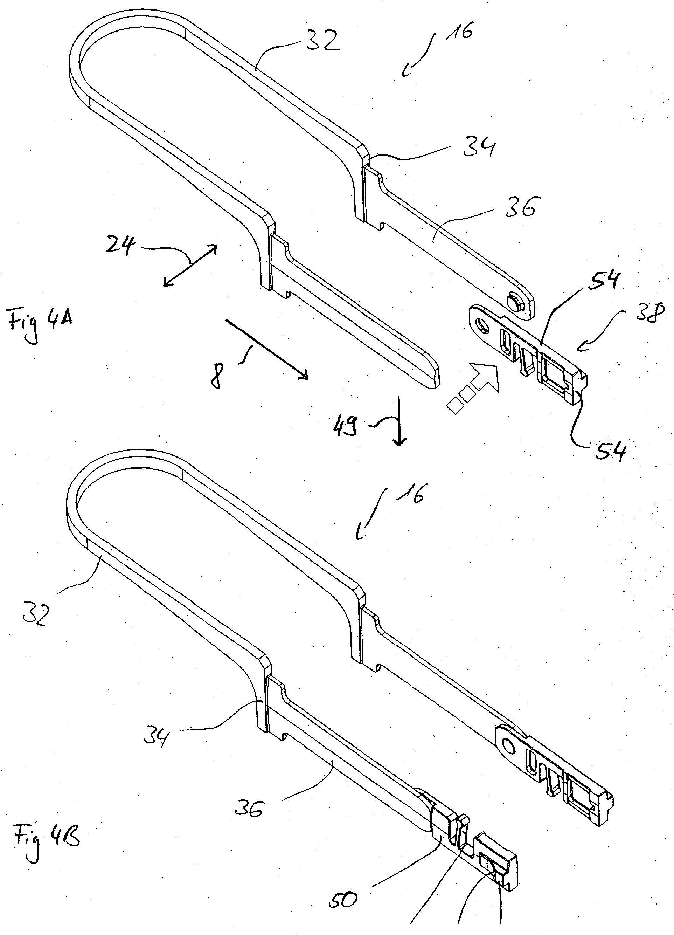

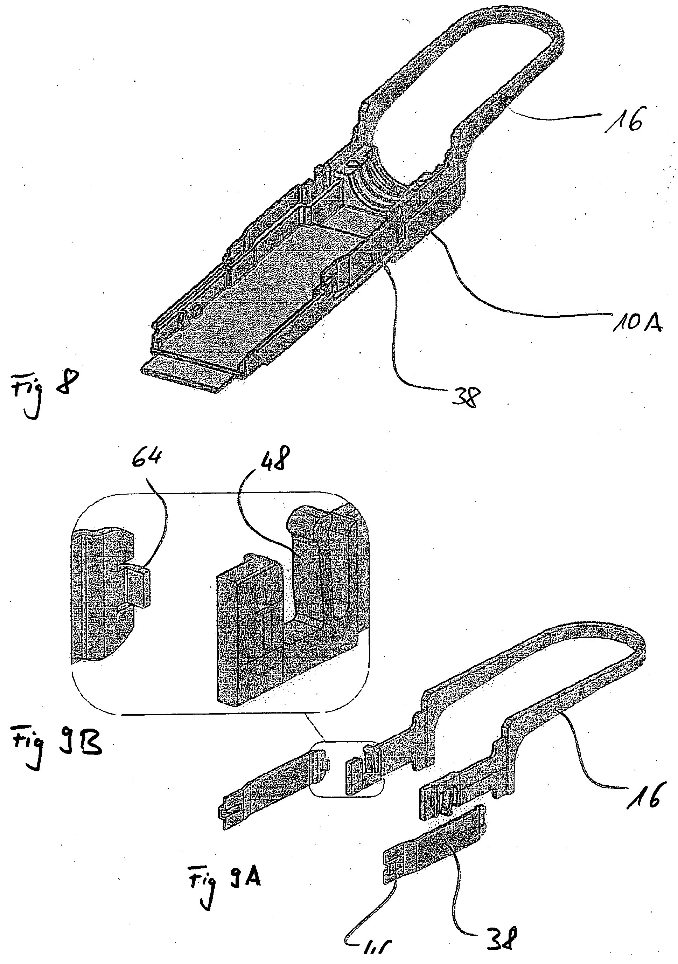

Anhand der Figuren 8, 9A und 9B wird eine zweite Ausführungsvariante erläutert. Bei dieser ist im Unterschied zu der zu den Fig. 1 bis 7 beschriebenen Ausführungsvariante vorgesehen, dass die Federlaschen 48 endseitig an den Gabelarmen 36 des Betätigungselements 16 ausgebildet sind. Der spezielle Aufbau und die Wirkungsweise der Federlaschen 48 entspricht hierbei vorzugsweise der Ausgestaltung wie bei der ersten Ausführungsvariante. Insoweit ist bei der zweiten Ausführungsvariante der Entriegler 46 und das Federelement 48 an verschiedenen Bauteilen ausgebildet.

Das Entriegelungselement 38 ist insbesondere als ein dünnes Metallblech ausgebildet, welches zweifach gebogen ist, so dass es einen nach außen gebogenen Mittenbereich aufweist. Wie insbesondere aus Fig. 8 zu entnehmen ist, verläuft dieser Mittenbereich des Entriegelungselements 38 an der Außenseite des Steckergehäuses 10, so dass ein verbreiteter Innenraum zur Verfügung steht. Das Entriegelungselement 38 weist an seiner einen Endseite den Entriegler 46 auf. Dessen Ausgestaltung und Funktionsweise ist vorzugsweise zumindest weitgehend identisch zu der ersten Ausführungsvariante. Das Entriegelungselement 38 wird mit seinem gegenüberliegenden Ende nach Art einer Steckverbindung formschlüssig mit dem Betätigungselement 16 verbunden, wie dies insbesondere aus der Fig. 9B zu erkennen ist. Hierzu ist eine Stecknase 64 umgebogen, die senkrecht zur Längsrichtung 8 in eine zugeordnete Stecköffnung am Betätigungselement 16 reversibel einsteckbar ist.

**Bezugszeichenliste**

| | | | |
|---|---|---|---|
| | | 30 | Innenwand |
| 2 | Steckerelement | 32 | Griffteil |
| 4 | Gegenstück | 34 | L-Schenkel |
| 6 | Leiterplatte | 36 | Gabelarm |
| 8 | Längsrichtung | 38 | Entriegelungselement |
| 10 | Steckergehäuse | 40 | Stufe |
| 10A | unteres Gehäuseteil | 42 | Fortführung |
| 10B | oberes Gehäuseteil | 44 | Widerlager |
| 12A | hinterer Bereich | 46 | Entriegler |
| 12B | vorderer Steckbereich | 48 | Federtasche |
| 14 | Datenleitung | 49 | Vertikalrichtung |
| 16 | Betätigungselement | 50 | Äußere Flachseiten |
| 18A | Seitenwand | 52 | Keilfläche |
| 18B | Seitenwand | 54 | Stirnseite |
| 20 | Aussparung | 56 | Verbindungselement |
| 22 | Verriegelungslasche | 58 | Außenhülse |
| 24 | Querrichtung | 60 | Innenhülse |
| 26 | Kante | 62 | Anschlag |
| 28 | Führung | 64 | Stecknase |
| 28A | Führungsteilkanal | | |

## Patentansprüche

1. Steckerelement (2) mit einem Verriegelungsmechanismus zur Ausbildung einer verriegelbaren Steckverbindung mit einem Gegenstück (4), insbesondere ein QSFP-Steckerelement, umfassend ein sich in Längsrichtung (8) erstreckendes Steckergehäuse (10) und ein in Längsrichtung (8) verschieblich gelagertes Betätigungselement (16) zur Entriegelung, das gabelförmig mit zwei Gabelarmen (36) ausgebildet ist und an jedem Gabelarm (36) endseitig ein Entriegelungselement (38) vorgesehen ist, wobei ein Wandungsabschnitt des Steckergehäuses (10) im gesteckten Zustand mit einem Wandungsabschnitt des Gegenstücks (4) zur Ausbildung der Verriegelung verrastet ist und hierzu eine elastische Verriegelungslasche (22) eine Kante (26) einer Aussparung (20) hintergreift und wobei das Entriegelungselement (38) derart ausgebildet ist, dass beim Verschieben des Betätigungselements (16) die Lasche (22) in Querrichtung (24) senkrecht zur Längsrichtung (8) aus der Verriegelungsstellung gebracht wird, wobei ein Federelement (48) vorgesehen ist, mit dessen Hilfe das Betätigungselement (16) nach einem Betätigen in eine Grundposition zurückgeführt wird,
**dadurch gekennzeichnet,**
**dass** als Federelement eine Federlasche (48) nach Art eines Steges ausgebildet ist, der innerhalb einer Ausnehmung des Entriegelungselements (38) oder des Betätigungselements (16) elastisch angeformt ist, sich in einer Vertikalrichtung (49) senkrecht zur Längsrichtung (8) und zur Querrichtung (24) erstreckt und über eine der Stirnseiten (54) des plattenförmigen Entriegelungselments (38) oder Betätigungselements (16) übersteht.

2. Steckerelement (2) nach Anspruch 1,
**dadurch gekennzeichnet,**
**dass** das Entriegelungselement (38) an einer Außenseite einen Entriegler (46) mit einer schräg zur Längsachse (8) verlaufenden Fläche (52) umfasst, die beim Verschieben des Betätigungselements (16) mit der Verriegelungslasche (22) zusammenwirkt und diese zur Entriegelung in Querrichtung (24) versetzt wird.

3. Steckerelement (2) nach einem der vorhergehenden Ansprüche,
**dadurch gekennzeichnet,**
**dass** die Aussparung (20) in Längsrichtung (8) unter Ausbildung einer Stufe (40) eine Fortführung (42) aufweist, in der der Entriegler (46) in einer Grundposition einliegt.

4. Steckerelement (2) nach einem der vorhergehenden Ansprüche,
**dadurch gekennzeichnet,**
**dass** das Federelement (48) in ein am Steckergehäuse (10) ausgeformtes Widerlager (44) eingreift.

5. Steckerelement (2) nach einem der vorhergehenden Ansprüche,
**dadurch gekennzeichnet,**
**dass** das Entriegelungselement (38) als ein schmales plattenförmiges Element insbesondere aus Metall ausgebildet ist, welches von dem im Inneren des Steckergehäuses (10) geführten Betätigungselements (16) nach außen geführt ist und an einer Außenseite des Steckergehäuses (10) entlang verläuft.

6. Steckerelement (2) nach einem der vorhergehenden Ansprüche,
**dadurch gekennzeichnet,**
**dass** das Entriegelungselement (38) aus einem elastischen Material wie beispielsweise aus Kunststoff oder aus Metall ist.

7. Steckerelement (2) nach einem der vorhergehenden Ansprüche,
**dadurch gekennzeichnet,**
**dass** das Entriegelungselement (38) ein separates Bauteil ist, das mit einem Grundteil (32,34,36) des Betätigungselements (16) insbesondere durch Verrastung verbunden ist.

8. Steckerelement (2) nach einem der Ansprüche 1 bis 7,
**dadurch gekennzeichnet,**
**dass** die beiden Entriegelungselemente (38) identisch ausgebildet sind und an den Gabelenden zueinander um 180° gedreht angeordnet sind.

9. Steckerelement (2) nach einem der vorhergehenden Ansprüche,
**dadurch gekennzeichnet,**
**dass** das Betätigungselement (16) ein von außerhalb des Steckergehäuses (10) betätigbares Griffteil (32) aufweist und derart ausgebildet ist, dass das Griffteil (32) wahlweise ober- oder unterhalb einer in das Steckergehäuse (10) führenden Leitung (14) angeordnet werden kann und dass das Betätigungselement (16) hierzu wahlweise um 180° gedreht am Steckergehäuse (10) positionierbar ist.

10. Steckerelement (2) nach Anspruch 9,
**dadurch gekennzeichnet,**
**dass** das Griffteil (32) über zwei in etwa L-förmige Schenkel (34) außen am Steckergehäuse (10) anliegt und dass sich an die L-Schenkel (34) die Gabelarme (36) anschließen, die sich in das Steckergehäuse (10) entlang einer Mittenebene erstreckend anschließen.

11. Steckerelement (2) nach Anspruch 9 oder 10,
**dadurch gekennzeichnet,**
**dass** das Griffteil (32) nicht über die durch das Steckergehäuse (10) definierte Querschnittskontur übersteht.

12. Steckerelement (2) nach einem der vorhergehenden Ansprüche,
**dadurch gekennzeichnet,**
**dass** das Steckergehäuse (10) zwei, insbesondere entlang einer Mittenebene getrennte Steckergehäuseteile (10A,10B) aufweist, und dass in jedem Steckergehäuseteil (10A,10B) ein Führungsteilkanal (28A) vorgesehen ist, die sich zu einer Führung (28) für das Betätigungselement (16) ergänzen.

13. Steckerelement (2) nach Anspruch 4 und Anspruch 12,
**dadurch gekennzeichnet,**
**dass** die Führungsteilkanäle (28A) symmetrisch zueinander ausgebildet sind und jeder als das Widerlager (44) eine Aussparung für das Federelement (48) aufweist, so dass das Federelement - je nach seiner Einbaulage - wahlweise in das obere oder untere Widerlager (44) eingreift.

## Claims

1. Connector element (2) having a locking mechanism for the formation of a lockable plug connection with a counterpart (4), in particular a QSFP connector element, comprising a connector housing (10) extending in the longitudinal direction (8) and an actuation element (16) for unlocking, which is assembled displaceably in the longitudinal direction (8), said actuation element being formed in a forked manner with two fork arms (36), and an unlocking element (38) is provided on the end of each fork arm (36), wherein
a wall section of the connector housing (10) is locked in place in the plugged-in state with a wall section of the counterpart (4) for the formation of the lock and, for this, an elastic locking flap (22) engages behind an edge (26) of a recess (20), and wherein the unlocking element (38) is formed in such a way that, during the displacement of the actuation element (16), the flap (22) is brought out of the locked position in the transverse direction (24) perpendicular to the longitudinal direction (8), wherein a spring element (48) is provided, with the aid of which the actuation element (16) is guided back into a starting position after an actuation,
**characterised in that**
a spring flap (48) in the manner of a bar is formed as the spring element which is formed elastically within a recess of the unlocking element (38) or the actuation element (16), extends in a vertical direction (49) perpendicular to the longitudinal direction (8) and to the transverse direction (24) and protrudes above one of the front faces (54) of the plate-shaped unlocking element (38) or actuation element (16).

2. Connector element (2) according to claim 1,
**characterised in that**
the unlocking element (38) comprises, on an outer side, an unlocking device (46) having a face (52) running at an angle to the longitudinal axis (8), said face interacting with the locking flap (22) during displacement of the actuation element (16) and displacing this locking flap in the transverse direction (24) for unlocking.

3. Connector element (2) according to one of the preceding claims,
**characterised in that**
the recess (20) has a continuation (42) in the longitudinal direction (8), forming a step (40), in which continuation the unlocking device (46) is inserted in a starting position.

4. Connector element (2) according to one of the preceding claims,
**characterised in that**
the spring element (48) engages with an abutment (44) formed on the connector housing (10).

5. Connector element (2) according to one of the preceding claims,
**characterised in that**
the unlocking element (38) is formed as a narrow, plate-shaped element, in particular made from metal, which is guided outwards from the actuation element (16) guided in the interior of the connector housing (10), and runs along an outer side of the connector housing (10).

6. Connector element (2) according to one of the preceding claims,
**characterised in that**
the unlocking element (38) is made of an elastic material such as plastic or metal.

7. Connector element (2) according to one of the preceding claims,
**characterised in that**
the unlocking element (38) is a separate component which is connected to a basic part (32, 34, 36) of the actuation element (16), in particular by latching.

8. Connector element (2) according to one of claims 1 to 7,
**characterised in that**
both unlocking elements (38) are formed identically and are arranged with 180° rotation relative to each other on the fork ends.

9. Connector element (2) according to one of the preceding claims,
**characterised in that**
the actuation element (16) has a handle (32) that is able to be actuated from outside the connector housing (10) and is formed in such a way that the handle (32) can optionally be arranged above or below a line (14) leading into the connector housing (10), and, for this, the actuation element (16) is optionally able to be positioned with 180° rotation on the connector housing (10).

10. Connector element (2) according to claim 9,
**characterised in that**
the handle (32) fits on the outside of the connector housing (10) via two approximately L-shaped limbs (34) and the fork arms (36) are attached to the L-shaped limbs (34), said fork arms being connected with an extension into the connector housing (10) along a central plane.

11. Connector element (2) according to claim 9 or 10,
**characterised in that**
the handle (32) does not protrude over the cross-sectional contour defined by the connector housing (10).

12. Connector element (2) according to one of the preceding claims,
**characterised in that**
the connector housing (10) has two connector housing parts (10A, 10B) which are in particular divided along a central plane, and a guiding sub-channel (28A) is provided in each connector housing part (10A, 10B), said guiding sub-channels combining to form a guide (28) for the actuation element (16).

13. Connector element (2) according to claim 4 and claim 12,
**characterised in that**
the guiding sub-channels (28A) are designed symmetrically relative to one another and, as the abutment (44), each has a recess for the spring element (48), such that the spring element - according to its installation position - optionally engages with the upper or lower abutment (44).

## Revendications

1. Elément de connecteur (2) avec un mécanisme de verrouillage pour réaliser une liaison de connexion verrouillable avec une pièce conjuguée (4), notamment un élément de connecteur QSFP, comprenant un boitier de connecteur (10) s'étendant en direction longitudinale (8), et un élément d'actionnement (16) monté coulissant dans la direction longitudinale (8) pour le déverrouillage, qui est d'une configuration en forme de fourche avec deux bras de fourche (36), et sur chaque bras de fourche (36) est prévu, à l'extrémité, un élément de déverrouillage (38),
élément de connecteur
dans lequel un tronçon de paroi du boitier de connecteur (10) vient s'encliqueter, dans l'état enfiché, avec un tronçon de paroi de la pièce conjuguée (4) pour réaliser le verrouillage, une languette de verrouillage élastique (22) venant à cet effet s'engager derrière un bord (26) d'un évidement (20), et
dans lequel l'élément de déverrouillage (38) est conçu de manière telle, que lors du coulissement de l'élément d'actionnement (16), la languette (22) est déplacée dans la direction transversale (24), perpendiculairement à la direction longitudinale (8), hors de la position de verrouillage, et
dans lequel il est prévu un élément de ressort (48) à l'aide duquel l'élément d'actionnement (16) est ramené, après un actionnement, dans une position de base,
**caractérisé**
**en ce qu'**en guise d'élément de ressort, il est réalisé une languette élastique (48) à la manière d'une nervure, qui est formée par moulage, de manière élastique, à l'intérieur d'un évidement de l'élément de déverrouillage (38) ou de l'élément d'actionnement (16), s'étend dans une direction verticale (49) perpendiculairement à la direction longitudinale (8) et à la direction transversale (24), et fait saillie de l'une des faces frontales (54) de l'élément de déverrouillage (38) en forme de plaque ou de l'élément d'actionnement (16).

2. Elément de connecteur (2) selon la revendication 1,
**caractérisé**
**en ce que** l'élément de déverrouillage (38) comprend un organe de déverrouillage (46) avec une surface (52) s'étendant de manière inclinée par rapport à l'axe longitudinal (8), et qui lors du coulissement de l'élément d'actionnement (16), interagit avec la languette de verrouillage (22) et déplace celle-ci dans la direction transversale (24) pour le déverrouillage.

3. Elément de connecteur (2) selon l'une des revendications précédentes,
**caractérisé**
**en ce que** l'évidement (20) présente en direction longitudinale (8), en formant un gradin (40), un prolongement (42) dans lequel est logé l'organe de déverrouillage (46), dans une position de base.

4. Elément de connecteur (2) selon l'une des revendications précédentes,
**caractérisé**
**en ce que** l'élément de ressort (48) s'engage dans un palier d'appui (44) formé dans le boitier de connecteur (10).

5. Elément de connecteur (2) selon l'une des revendications précédentes,
**caractérisé**
**en ce que** l'élément de déverrouillage (38) est réalisé en tant qu'élément étroit en forme de plaque, notamment en métal, qui est mené vers l'extérieur à partir de l'élément d'actionnement (16) guidé à l'intérieur du boitier de connecteur (10), et s'étend le long d'un côté extérieur du boitier de connecteur (10).

6. Elément de connecteur (2) selon l'une des revendications précédentes,
**caractérisé**
**en ce que** l'élément de déverrouillage (38) est réalisé en un matériau élastique comme par exemple une matière plastique ou un métal.

7. Elément de connecteur (2) selon l'une des revendications précédentes,
**caractérisé**
**en ce que** l'élément de déverrouillage (38) est une pièce distincte séparée, qui est reliée à une pièce de base (32, 34, 36) de l'élément d'actionnement (16), notamment par encliquetage.

8. Elément de connecteur (2) selon l'une des revendications 1 à 7,
**caractérisé**
**en ce que** les deux éléments de déverrouillage (38) sont de configuration identique et sont agencés aux extrémités de fourche en étant mutuellement tournés de 180° l'un par rapport à l'autre.

9. Elément de connecteur (2) selon l'une des revendications précédentes,
**caractérisé**
**en ce que** l'élément d'actionnement (16) présente une partie de poignée (32) pouvant être actionnée à partir de l'extérieur du boitier de connecteur (10), en ce que la partie de poignée (32) peut être agencée sélectivement au-dessus ou en-dessous d'un conducteur ou câble (14) menant à l'intérieur du boitier de connecteur (10), et en ce que l'élément d'actionnement (16) peut à cet effet, être positionné sélectivement de manière tournée de 180° sur le boitier de connecteur (10).

10. Elément de connecteur (2) selon la revendication 9,
**caractérisé**
**en ce que** la partie de poignée (32) s'appuie contre l'extérieur du boitier de connecteur (10) par l'intermédiaire de deux branches (34) sensiblement en forme de L, et en ce qu'aux branches (34) se raccordent les bras de fourche (36), qui s'étendent à l'intérieur du boitier de connecteur (10) le long d'un plan médian.

11. Elément de connecteur (2) selon la revendication 9 ou la revendication 10,
**caractérisé**
**en ce que** la partie de poignée (32) ne dépasse pas d'un contour de section transversale défini par le boitier de connecteur (10).

12. Elément de connecteur (2) selon l'une des revendications précédentes,
**caractérisé**
**en ce que** le boitier de connecteur (10) présente deux parties de boitier de connecteur (10A, 10B), notamment séparées le long d'un plan médian, et en ce que dans chaque partie de boitier de connecteur (10A, 10B) est prévu un canal partiel de guidage (28A), ces canaux partiels se complétant en un guide (28) pour l'élément d'actionnement (16).

13. Elément de connecteur (2) selon la revendication 4 et la revendication 12,
**caractérisé**
**en ce que** les canaux partiels de guidage (28A) sont de configuration mutuellement symétrique, et chacun présente, en tant que palier d'appui (44), un évidement pour l'élément de ressort (48), de sorte que l'élément de ressort - en fonction de sa position d'implantation - s'engage sélectivement dans le palier d'appui (44) supérieur ou inférieur.
